# FASCICULE DE BREVET EUROPEEN

(11) **EP 1 057 069 B1**
(45) Date de publication et mention de la délivrance du brevet: **04.06.2003**
(21) Numéro de dépôt: 99902589.3
(22) Date de dépôt: 12.02.1999
(51) Int. Cl.: G02B 27/01

(54) **DISPOSITIF OPTIQUE POUR VISEUR DE CASQUE COMPORTANT UN MIROIR TUBULAIRE**
OPTISCHE VORRICHTUNG MIT ROHRFÖRMIGEN SPIEGEL FÜR AM HELM BEFESTIGTES SICHTGERÄT
OPTICAL DEVICE FOR PILOT'S VISOR COMPRISING A TUBULAR MIRROR

(30) Priorité: 20.02.1998 FR 9802085
(43) Date de publication de la demande: 06.12.2000
(73) Titulaire: THALES AVIONICS S.A., 78141 Vélizy Villacoublay Cédex (FR)
(72) Inventeur: POTIN, Laurent, Thomson-CSF, F-94117 Arcueil Cedex (FR); BIGNOLLES, Laurent, Thomson-CSF, F-94117 Arcueil Cedex (FR)
(74) Mandataire: Lucas, Laurent Jacques
(86) Numéro de dépôt international: FR9900172
(87) Numéro de publication internationale: WO99042888

(56) Documents cités:
- EP-A- 0 531 121
- EP-A- 0 744 643
- PINHAS GILBOA ET AL: "THIRD-GENERATION DASH HELMET" DISPLAYS, vol. 15, no. 2, 1 janvier 1994, pages 106-109, XP000511188

## Description

La présente invention concerne un dispositif optique de correction d'aberrations affectant une image. En particulier, un dispositif selon l'invention permet de corriger la distorsion due à un miroir concave sphérique incliné par rapport à la direction sous laquelle ce miroir est observé.

L'invention s'applique notamment, mais non exclusivement, à un viseur de casque pour pilote d'avion ou d'hélicoptères d'armes ou pour opérateur d'un simulateur d'entraînement.

Un viseur de casque est un dispositif de présentation d'images intégré à un casque. Le viseur permet au porteur du casque, comme par exemple un pilote d'avion en vol, d'observer des informations visuelles simultanément à la vue du paysage, ou du poste de pilotage, qu'il perçoit le plus souvent à travers une visière de protection.

La présentation d'informations adaptées, par exemple sous forme de symboles, permet une aide au pilotage et à la navigation. Ainsi pour des véhicules armés la présentation d'un réticule réalise une aide à la visée d'une arme.

Les informations peuvent aussi consister en une image du paysage acquise par des capteurs différents de l'oeil du porteur du casque comme des capteurs d'image infrarouge ou des intensificateurs de lumière pour compléter ou remplacer la vue directe.

A l'intérieur du casque, un générateur d'image comporte un imageur dont l'écran, par exemple un écran de tube cathodique ou un écran à cristaux liquides, permet d'afficher une image.

L'image est le plus souvent transportée à l'aide d'une optique de relais jusqu'à un combineur qui assure une présentation de l'image transportée en superposition à la vue du paysage.

Pour permettre au pilote une observation simultanée du paysage vu directement à l'infini et de l'image de l'imageur, cette dernière est aussi focalisée à l'infini par une optique de collimation.

Lorsque le combineur est formé d'une simple lame plane semi-réfléchissante, la collimation de l'image peut être réalisée par une optique placée entre l'imageur et le combineur; une telle réalisation de l'art antérieur présente l'inconvénient principal de nécessiter une optique de collimation trop encombrante relativement au champ de vue restreint procuré.

Pour réduire l'encombrement, un combineur présentant une puissance optique a été proposé ; un tel combineur réalise pour son utilisateur à la fois la collimation de l'image et la superposition de l'image collimatée avec la vue du paysage.

L'art antérieur est riche de dispositifs nombreux et variés comportant un combineur à puissance optique. On s'intéresse plus particulièrement aux systèmes de présentation d'images comportant un miroir concave sphérique pour collimater l'image.

EP-A-531 121 divulgue un viseur de casque comportant au moins un miroir torique afin de corriger un astigmatisme introduit par un miroir hors d'axe.

Un miroir sphérique concave réalise une collimation de qualité moyenne d'une image placée en un point particulier de l'espace situé sur l'axe du miroir et à une distance de celui-ci égale à la moitié de son rayon de courbure. En plaçant un imageur en ce point, l'oeil situé sur l'axe du miroir reçoit des rayons issus de l'imageur après leur réflexion sur le miroir sphérique, ces rayons sont parallèles et conduisent à la perception par l'oeil d'une image collimatée. Si de plus le miroir est semi-réfléchissant, il permet au même oeil d'observer le paysage par transparence. Cependant dans un tel dispositif l'imageur devrait se trouver sur l'axe du miroir sphérique semi-transparent et il masquerait le champ de vue de l'utilisateur.

Pour dégager la vue de l'utilisateur, le miroir sphérique est incliné par rapport à la normale au visage et l'oeil de l'utilisateur n'est plus sur l'axe du miroir. Cette disposition présente l'inconvénient de conduire à une image collimatée affectée d'aberrations optiques, d'excentrement en particulier, qu'il est nécessaire de corriger au moins partiellement.

L'inclinaison du miroir concave sphérique entache l'image collimatée de distorsion, appelée distorsion d'excentrement de seconde espèce, caractérisée par une convergence des verticales et une courbure apparente des horizontales.

L'art antérieur nous enseigne pour corriger la distorsion de l'image fournie par un ensemble optique d'introduire une distorsion inverse au niveau de l'imageur par correction électronique ; ceci est aisément réalisé lorsque l'imageur comporte un tube cathodique mais cette solution n'est pas adaptée à un imageur, comme par exemple un intensificateur de lumière, qui ne présente pas les réglages nécessaires de l'image. On pourrait aussi essayer de corriger la distorsion en insérant dans le trajet optique entre l'imageur et le miroir sphérique un autre miroir sphérique incliné introduisant une distorsion inverse du premier ; mais on aboutirait à un système optique inutilisable du fait de son encombrement.

Le problème consiste à réaliser un dispositif de présentation d'images comportant un miroir de collimation sphérique, présentant une image collimatée satisfaisante pour l'utilisateur c'est-à-dire dépourvue d'aberrations gênantes et présentant un grand champ de vue, de préférence supérieur ou égal à 40 degrés. Il s'agit d'obtenir une image collimatée qui présente à la fois une bonne résolution et une bonne correction de la distorsion. La distorsion à corriger, due à un miroir de collimation sphérique observé sous un angle oblique par rapport à l'axe du miroir, est une distorsion d'excentrement de seconde espèce. La difficulté consiste à trouver un moyen pour corriger la distorsion ne dégradant pas la qualité de l'image, présentant à la fois une masse, un encombrement et un coût réduits et de fabrication facile.

C'est pourquoi l'invention propose un dispositif optique selon la revendication 1.

Les revendications dépendantes concernent des modes de réalisation additionels.

Par miroir tubulaire on entend un miroir dont la surface est engendrée par le déplacement d'une portion d'une première courbe plane en translation le long d'une portion d'une seconde courbe. De préférence la première courbe plane est dans un plan perpendiculaire au plan de symétrie du système. De préférence la seconde courbe est également plane et située dans le plan de symétrie du système de présentation d'images. De préférence la portion de la première courbe plane est un arc de cercle et la portion de la seconde courbe aussi mais on pourrait aussi envisager que ces courbes soient des coniques (ellipse, parabole, hyperbole).

La surface du miroir concave tubulaire permet d'aider à corriger la distorsion de l'image présentée à l'utilisateur par un miroir de collimation sphérique hors axe, et de plus ce type de miroir est particulièrement facile à usiner, notamment si la première courbe (celle qui subit une translation pour engendrer la surface du miroir) est un arc de cercle.

Le dispositif comporte également un ou plusieurs groupes optiques de puissance ou de relais placés sur le trajet des rayons entre l'imageur et le miroir sphérique, en amont et/ou en aval du miroir tubulaire.

La correction de la distorsion par un miroir tubulaire est en principe d'autant meilleure que ces groupes optiques donnent aux faisceaux issus de l'imageur et incidents sur le miroir tubulaire une ouverture plus petite (alors qu'on souhaite une large ouverture du faisceau au niveau du miroir sphérique).

Ces groupes optiques assurent aussi la précorrection de l'astigmatisme nécessairement introduit dans l'image collimatée du fait que le miroir sphérique est observé sous un angle incliné par rapport au rayon qui définit l'axe optique de ce miroir. Cet astigmatisme peut être corrigé par exemple par une lentille convergente sphérique et une lentille cylindrique, dans un groupe optique de relais situé entre l'imageur et le miroir tubulaire. Il peut être corrigé aussi par une lentille diffractive placée dans un groupe de puissance entre le miroir tubulaire et le miroir sphérique.

Dans un exemple particulier, on peut prévoir un groupe de puissance entre le miroir tubulaire et le miroir sphérique avec les particularités suivantes : il présente une lentille convergente dont le foyer est pratiquement centré sur ta première image pupillaire laquelle est l'image de la pupille de l'oeil par le miroir sphérique hors axe. Le groupe de puissance concentre sur le miroir tubulaire les faisceaux de rayons optiques qui, venant de la pupille de l'oeil, ont été réfléchis par le miroir de collimation sphérique incliné. Ces faisceaux sont presque parallèles.

L'invention permet de conserver une image de bonne résoluüon tout en assurant une correction poussée de la distorsion due au miroir de collimation sphérique et incliné. L'invention présente l'avantage de corriger la distorsion de l'image présentée à l'oeil de l'utilisateur pour une pupille instrumentale large, par exemple d'au moins 15 millimètres de diamètre, et pour un champ large typiquement supérieur à 40 degrés. La pupille instrumentale est la zone de l'espace dans laquelle l'utilisateur d'un instrument doit placer la pupille de son oeil pour l'utiliser.

Cette correction est particulièrement intéressante lorsqu'une distorsion ne peut pas être imposée facilement au niveau de l'imageur. En effet dans un tel cas une correction électronique de l'art antérieur ne convient pas.

La première image pupillaire du dispositif est inclinée par rapport à l'axe optique, le miroir concave tubulaire selon l'invention en donne une seconde image pupillaire redressée sur l'axe optique.

L'invention peut être intégrée à un viseur de casque présentant une pupille instrumentale large et un champ large.

D'autres caractéristiques et avantages de l'invention apparaîtront à la lecture de la description détaillés suivante de réalisations particulières qui sont faites en référence aux dessins annexés suivants :
- la figure 1 représente schématiquement et partiellement un dispositif optique avec miroir combineur sphérique hors axe optique,
- la figure 2 représente la distorsion que l'invention corrige,
- la figure 3 représente un dispositif selon l'invention avec une optique de relais.

Dans les dessins, les schémas optiques sont représentés développés dans un plan dit plan de symétrie de l'optique. Ce plan contient la normale à la pupille de l'entrée de l'oeil de l'utilisateur et le centre de la sphère supportant le miroir sphérique. Dans la réalité, des miroirs non représentés, qui n'introduisent pas d'aberration, permettent de diriger les faisceaux dans les trois dimensions, pour satisfaire diverses contraintes d'encombrement : par exemple pour que le dispositif soit adapté au contour de la tête de l'utilisateur.

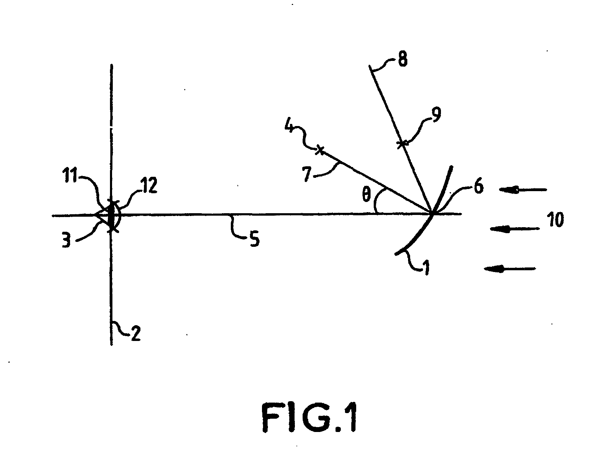

Sur la figure 1, un utilisateur d'un dispositif optique comportant un miroir sphérique 1 est représenté par le plan des pupilles 2 et la droite 5 normale à ce plan 2. La pupille 11 de l'oeil est généralement située optiquement à 3 millimètres en retrait de la cornée 12 de l'oeil 3.

On note qu'en fonction de son orientation par rapport au visage de l'utilisateur, la droite 5 peut correspondre à la vue de l'utilisateur droit devant lui, ou bien à une vue vers le haut, vers le bas, vers un côté ou le côté opposé.

Le miroir sphérique 1 est placé en avant de l'utilisateur, sa concavité est tournée vers l'utilisateur. L'intersection de l'axe d'observation 5 avec le miroir 1 est désignée par la référence 6.

Le miroir sphérique 1 est supporté par une sphère dont le centre 4 n'appartient pas à cette droite 5. Le plan de la figure 1 est un plan de l'espace qui contient le centre de la sphère support du miroir sphérique 1 et la droite 5 passant par le centre de la pupille 11 de l'oeil 3. C'est le plan d'incidence de la droite 5 sur le miroir sphérique 1, on l'appelle plan de symétrie de l'optique. Le plus souvent ce plan est confondu avec le plan passant par le centre de la pupille 11 et parallèle au plan de symétrie théorique du visage de l'utilisateur.

La droite 5 et le rayon 7 de la sphère passant par le point d'intersection 6 sont écartés d'un angle θ. Une valeur non nulle de cet angle θ caractérise une utilisation hors axe du miroir sphérique 1. Le miroir sphérique 1 lui-même est dit "hors axe".

On s'intéresse à un rayon optique 8 qui est symétrique de la droite 5 de l'axe optique par rapport au rayon 7 de la sphère. En première approximation, une image dont le centre 9 est placé à une distance égale à la moitié du rayon de courbure de la sphère sur ce rayon optique est perçue par l'oeil 3 de l'utilisateur comme collimatée au premier ordre car les rayons lumineux issus de l'image ainsi placée sont réfléchis par le miroir sphérique 1 en direction de l'oeil 3 sous la forme d'un faisceau de rayons sensiblement parallèles. L'image de centre 9 peut présenter de la courbure de champ.

Cependant la collimation par réflexion sur le miroir sphérique n'est pas parfaite, elle est affectée, en plus des aberrations intrinsèques à ce miroir, d'une aberration optique d'excentrement due à l'utilisation hors axe du miroir sphérique 1.

Le miroir sphérique 1 peut-être semi-transparent. Dans ce cas des rayons lumineux 10 provenant de l'environnement extérieur au miroir sphérique 1, c'est-à-dire venant frapper la face convexe de ce miroir, sont transmis à l'oeil 3 par le miroir sphérique 1. Ce miroir sphérique 1 réalise alors un combineur qui superpose une image collimatée avec la vue directe de l'environnement. C'est cette disposition qui est généralement adoptée dans un viseur de casque.

Le champ central est défini comme le faisceau des rayons lumineux issus du centre 9 de l'image à collimater. On considère un rayon lumineux particulier qui appartient au champ central et qui passe par le centre de la pupille de l'utilisateur. Le trajet de ce rayon lumineux est l'axe optique du dispositif utilisé. L'axe optique est généralement une ligne brisée. La droite 5 supporte une partie de l'axe optique. Le plus souvent, l'image est présentée droit devant l'utilisateur, la droite 5 est alors sensiblement normale au visage de l'utilisateur, mais l'image peut être.par exemple présentée en haut du champ de vision de repos à l'infini de l'utilisateur et la droite 5 est alors orientée dans la direction correspondante.

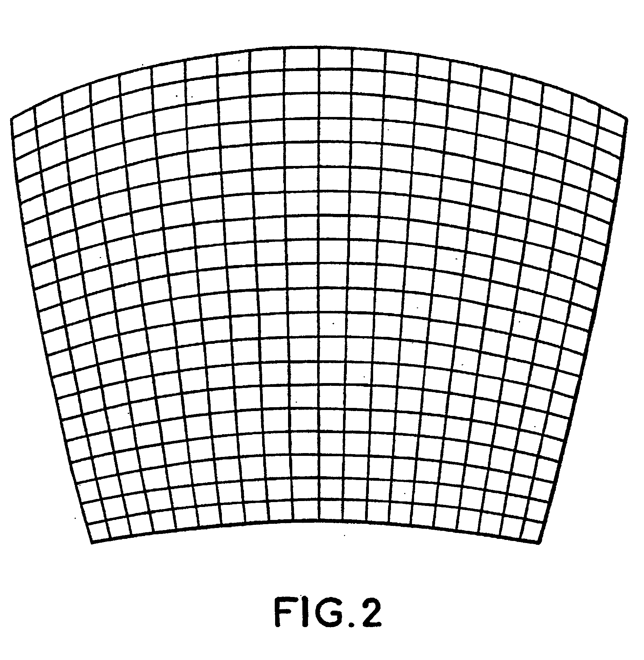

La figure 2 représente l'image que perçoit l'oeil de l'utilisateur d'un dispositif optique selon la figure 1 dans lequel une image centrée sur le point 9 et comportant un carré avec un quadrillage carré régulier est collimatée. La déformation perçue est une distorsion d'excentrement de seconde espèce: les lignes verticales qui devraient être des droites parallèles sont convergentes et les lignes horizontales qui devraient être des droites parallèles sont courbes. Cette distorsion est due à l'inclinaison du miroir sphérique de collimation par rapport à l'axe d'observation.

Divers éléments optiques vont être décrits selon l'invention afin d'obtenir à partir d'une image lumineuse, fournie par un imageur, la perception par l'oeil de l'utilisateur d'une image collimatée de bonne qualité.

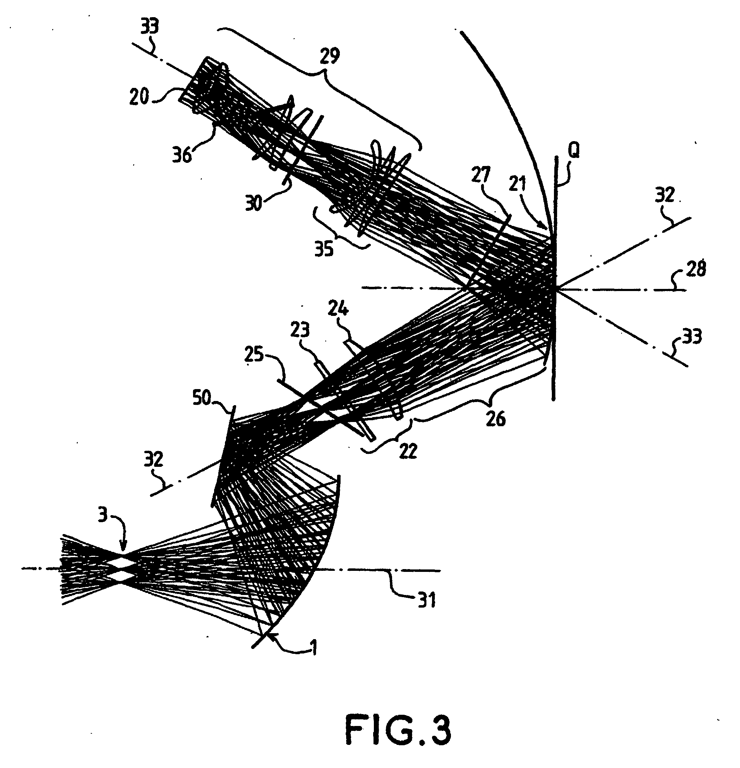

Sur la figure 3, des trajets de rayons lumineux à l'intérieur d'une réalisation d'un dispositif selon l'invention sont représentés.

Dans cet exemple, destiné à un viseur de casque, l'imageur, non représenté, comporte un écran comme par exemple l'écran d'un tube cathodique ou un écran à cristaux liquides. L'écran peut aussi être réalisé par exemple par une section de faisceau de fibres optiques ou une diapositive ou l'écran d'un tube intensificateur de lumière. Une image dont la surface est quelconque est affichée sur l'écran de l'imageur représenté par son plan tangent 20. L'image fournie par l'imageur peut être plane, sphérique ou avoir même encore une autre forme. Les trajets de rayons lumineux de l'écran 20 de l'imageur jusqu'à l'oeil 3 de l'utilisateur sont tracés pour cette réalisation de l'invention.

Le dispositif comprend un miroir sphérique 1 placé devant l'oeil 3 de l'utilisateur et un miroir tubulaire 21 placé entre l'écran 20 et le miroir sphérique 1. Le dispositif comprend un groupe de puissance 22 entre le miroir concave tubulaire 21 et le miroir sphérique 1. Il comporte également une optique de relais 29 entre l'écran 20 et le miroir tubulaire 21.

Les rayons lumineux issus de l'écran 20 de l'imageur sont reçus, après traversée de l'optique de relais 29, par le miroir tubulaire 21; ils sont réfléchis par ce dernier puis traversent le groupe de puissance 22 avant de frapper le miroir sphérique 1 hors axe qui assure une collimation de l'image finalement perçue par l'oeil 3 de l'utilisateur.

Les rayons lumineux issus du centre de l'écran 20 de l'imageur forment le champ central de l'imageur. L'axe optique du dispositif correspond au trajet du rayon du champ central qui passe par le centre de la pupille de l'oeil 3 de l'utilisateur.

On observe maintenant le trajet des rayons lumineux dans l'autre sens c'est-à-dire en partant de l'oeil 3 de l'utilisateur et en remontant les différents éléments optiques vers l'écran 20 de l'afficheur.

Les rayons issus de l'oeil sont réfléchis sur le miroir sphérique 1 hors axe. L'axe optique qui, dans l'exemple de la figure 3, est horizontal sur une première partie 31 entre le centre de la pupille de l'oeil 3 et le miroir sphérique 1 est également réfléchi sur le miroir sphérique 1.

Cette partie 31 de l'axe optique et sa réflexion sur le miroir sphérique 1 définissent un plan nommé plan d'incidence de l'axe optique sur le miroir sphérique 1 hors axe. Dans l'exemple de la figure 3, le plan d'incidence est confondu avec le plan de symétrie de l'optique qui est représenté par le plan de la figure 3. Le plan de symétrie de l'optique est un plan contenant le trajet décrit par l'axe optique entre l'imageur et la pupille de l'utilisateur. Mais une réalisation de l'invention n'est pas limitée à une optique dans ce plan ; dans le cadre de l'invention, il est toujours possible d'ajouter des miroirs plans supplémentaires permettant, par exemple, de sortir des éléments optiques en dehors du plan de la figure. En effet les miroirs plans, également appelés miroirs de pliage, ne modifient pas la fonction optique, ils n'apportent pas et ne corrigent pas d'aberration mais ils permettent aux rayons optiques de contourner des obstacles comme la tète de l'utilisateur.

Les rayons réfléchis par le miroir sphérique 1 frappent, dans cet exemple de réalisation, un miroir plan 50 qui permet le pliage des rayons optiques en respectant le plan d'incidence de l'axe optique sur le miroir sphérique 1. L'invention peut être réalisée sans ce miroir plan 50. Après réflexion sur le miroir plan 50, l'axe optique est orienté selon une droite 32 du plan d'incidence.

Sur la seconde partie 32 de l'axe optique, on observe une première image pupillaire 25 qui est l'image de la pupille de l'oeil 3 donnée par le miroir sphérique 1 hors axe.

La normale au plan tangent à cette première image pupillaire 25 n'est pas parallèle à la section correspondante 32 de l'axe optique. La première image pupillaire 25 est inclinée sur l'axe optique. Cette inclinaison est un effet de la distorsion à corriger.

Le groupe de puissance 22 est placé par exemple de façon à ce que la première image pupillaire 25 soit sur le trajet des rayons lumineux entre le miroir sphérique 1 et le groupe de puissance 22. Le groupe de puissance est de préférence centré sur la seconde partie 32 de l'axe optique. Dans cette réalisation, le groupe de puissance comporte une lentille diffractive 23 et une lentille convergente 24 dont le foyer est pratiquement centré sur la première image pupillaire 25. La lentille diffractive permet par exemple de précorriger l'astigmatisme obligatoirement introduit par l'observation hors axe du miroir sphérique. Le groupe de puissance peut aussi, par exemple, comporter une lentille divergente de part et d'autre de laquelle sont situées deux lentilles convergentes ayant chacune une puissance optique plus faible que la lentille 24 pour limiter les aberrations introduites par le groupe. de puissance 22 lui-même. Cette optique 22 canalise les faisceaux de rayons optiques dans une enveloppe 26, entre le groupe 22 et le miroir tubulaire 21, qui présente un diamètre sensiblement constant. Les faisceaux sont presque parallèles dans cette enveloppe 26. Le groupe 22 réduit donc l'ouverture du faisceau incident sur le miroir tubulaire 21, faisceau qui est en amont de ce miroir 21 si on considère les trajets de faisceau inversés, c'est-à-dire de l'oeil vers l'imageur. Cette ouverture est très faible en comparaison à l'ouverture des faisceaux incidents sur le miroir sphérique 1.

Le groupe de puissance affecte l'image et il permet au dispositif optique selon l'invention de présenter une bonne qualité d'image. Ce groupe de puissance est un élément optique proche de la première image pupillaire 25, il affecte peu cette dernière.

Le miroir concave tubulaire 21 est placé au voisinage de la seconde partie 32 de l'axe optique. La première image pupillaire 25 est d'un côté du groupe de puissance 22 et le miroir concave tubulaire 21 est de l'autre côté. Le miroir concave tubulaire 21 est situé sur le trajet des rayons qui viennent de la pupille de l'oeil 3 - car la description est ici décrite en remontant le trajet réel des rayons lumineux issus de l'écran de l'imageur- et il réfléchit ces rayons vers l'écran 20 de l'imageur. Le plan de la figure 3 est aussi le plan d'incidence de l'axe optique sur le miroir tubulaire 21.

La partie utile du miroir tubulaire 21 présente un plan tangent Q dont la normale 28, appartenant au plan d'incidence, n'est pas parallèle à la deuxième partie 32 de l'axe optique. Le miroir tubulaire 21 est incliné par rapport à l'axe optique, il est dit hors axe.

Le miroir tubulaire 21 présente une surface réfléchissante concave. Cette surface est générée par la translation d'une courbe plane, de préférence un arc de cercle pour des raisons de facilité d'usinage, le long d'une génératrice laquelle est également une courbe. Dans cette réalisation, la génératrice est dans le plan de la figure 3 qui est le plan de symétrie de l'optique du dispositif décrit. La courbe plane qui est translatée est parallèle à un plan perpendiculaire au plan d'incidence de l'axe optique sur le miroir sphérique 1 hors axe d'une part et contenant la seconde partie 32 de l'axe optique partant du miroir tubulaire 21 en direction du miroir sphérique. La seconde partie 32 de l'axe optique est une partie de l'axe optique incidente sur le miroir tubulaire 21 et située entre ce dernier et le miroir sphérique 1.

La courbe plane translatée est de préférence un arc de cercle. La surface ainsi engendrée est facile à usiner de façon parallèle avec un rayon constant par translation d'un outil animé d'un mouvement circulaire. Le miroir tubulaire 21 est peu coûteux.

La surface du miroir 21 permet de corriger la distorsion de l'image introduite par le miroir de collimation sphérique 1 utilisé hors axe.

Le miroir tubulaire 21 est proche de l'image intermédiaire 27 que le dispositif forme à partir de l'image affichée sur l'écran 20. Le miroir 21 affecte peu la résolution de l'image mais il affecte l'image pupillaire.

L'ouverture autour de l'axe 28 est suffisante pour optimiser le tirage laissé disponible pour placer par exemple des miroirs de renvoi entre le miroir tubulaire 21 et la lentille 24. Et l'angle d'incidence de l'axe optique sur le miroir tubulaire 21 permet aussi de limiter la surface utile et ainsi de conserver une bonne qualité d'image sur toute la surface. L'angle d'incidence est de préférence voisin de 45 degrés. Dans cette réalisation, la surface utile du miroir 21 est par exemple estimée par un diamètre d'environ 45 millimètres.

Le dispositif optique selon l'invention illustré par la figure 3 comporte également une optique relais 29 pour éloigner l'écran 20 de l'imageur du miroir tubulaire 21. Cet éloignement est généralement rendu nécessaire pour satisfaire des contraintes d'encombrement. Il permet par exemple pour un viseur de casque de placer l'ensemble de l'imageur, qui peut être un tube à rayons cathodiques, à une position satisfaisante dans le volume disponible du casque. Les faisceaux des rayons lumineux entre l'optique de relais 29 et le miroir tubulaire 21 présentent une très faible ouverture. Ces faisceaux sont en aval du miroir tubulaire 21 en considérant les trajets de faisceaux inversés, c'est-à-dire de l'oeil vers l'imageur. L'ouverture est très faible en comparaison à celle des faisceaux sur le miroir sphérique 1. L'optique de relais 29 peut aussi avoir des fonctions de puissance optique, par exempte pour remplacer la lentille diffractive 23 du groupe 22 et précorriger à proximité de l'imageur l'astigmatisme qui sera introduit par l'observation hors axe du miroir sphérique 1.

Sur la figure 3, on voit la troisième partie 33 de l'axe optique qui correspond à la réflexion de la seconde partie 32 de ce même axe optique sur le miroir tubulaire 21. L'optique de relais 29 est placée entre le miroir concave tubulaire 21 et l'écran 20 de l'imageur, elle est sensiblement alignée avec la troisième partie 33 de l'axe optique. Cette optique de relais essentiellement centrée est simple à réaliser.

Dans cet exemple optique 29 comporte également une lame semi-réféchissante 36, ou un cube mélangeur qui permet le mélange de la voie de l'écran 20 avec une voie d'un autre afficheur non représenté sur la figure 3. La lame 36 permet par exemple de superposer des informations visuelles d'un tube cathodique et celles issues d'un ensemble (non représenté) comportant un objectif de prise de vue et un intensificateur d'image.

Une seconde image pupillaire 30 peut être observée sur la partie 33 de l'axe optique, cette image est située entre le miroir tubulaire 21 et l'écran de l'imageur 20. Cette seconde image pupillaire 30 est vue par le miroir tubulaire 21 à travers un groupe 35 de lentilles appartenant à l'optique de relais 29.

D'autre part, le grandissement entre les deux images pupillaires 30 et 25 est de préférence d'une valeur proche de un. La conjugaison pupillaire pratiquement unitaire présente l'avantage de réduire l'encombrement du dispositif optique, elle permet une minimisation de la taille des optiques tout au long du chemin optique. Cette réduction d'encombrement est avantageuse pour le poids du dispositif et pour son coût.

L'image pupillaire 30 présente un plan tangent qui est sensiblement normal à l'axe optique 33 local : c'est une correction apportée par le miroir tubulaire 21. En effet, la première image 25 de la pupille de l'oeil formée par le miroir sphérique 1 est inclinée par rapport à l'axe optique local 32 et correspond aux aberrations induites par ce miroir 1 ; et la seconde image pupillaire 30 est redressée par rapport à l'axe optique 33 par le miroir tubulaire 21, elle est sensiblement perpendiculaire à l'axe optique 33.

Le miroir tubulaire permet au dispositif selon l'invention de présenter une bonne qualité de pupille.

Le miroir sphérique 1 hors axe peut être semi-transparent, dans ce cas, les rayons lumineux émis par le paysage ou l'environnement dans le champ de vue de l'utilisateur sont transmis par ce miroir et sont reçus par la pupille de l'oeil simultanément avec les rayons réfléchis par ce même miroir et précédemment décrits. Le miroir semi-transparent est un combineur. C'est donc un combineur sphérique utilisé hors axe.

Le combineur fait de préférence partie d'une visière de protection des yeux et même du visage de l'utilisateur.

Une visière selon l'invention présente au moins une partie réfléchissante sphérique hors axe. En position d'utilisation la visière est rabattue de façon à ce que la partie correspondant au miroir sphérique 1 soit placée devant l'oeil de l'utilisateur. L'ensemble du dispositif de présentation d'images collimatées peut être intégré à un casque par exemple pour un pilote d'avion ou d'hélicoptère et permet de réaliser un viseur de casque.

Le viseur peut être monoculaire s'il présente l'image collimatée à un seul oeil. Le viseur peut être binoculaire s'il comporte la présentation d'une image pour chaque oeil. Il présente l'avantage de permettre une vision agréable lorsque le recouvrement des champs de vue des deux images est total. Un viseur binoculaire peut également présenter un recouvrement partiel des deux champs de vue ce qui permet pour un même dimensionnent des optiques d'obtenir un champ de vue plus large sans trop dégrader la perception des informations présentées.

La distorsion d'une image présentant un quadrillage conduit à la déformation du quadrillage. Les images présentées à l'utilisateur et dont la distorsion inhérente à la visière concave sphérique hors axe est corrigée sont particulièrement avantageuses pour un viseur de casque car elles respectent les dimensions réelles des objets représentés. Ce qui est primordial lorsque le viseur présente une image superposée à la vue directe et l'est encore plus lorsque l'image présentée se substitue à la vue directe pour l'utilisateur par exemple dans le cas d'une vision nocturne assistée par un intensificateur d'image, d'une vision infrarouge ou d'un simulateur d'entraînement. La correction de cette distorsion présente l'avantage de permettre à l'utilisateur une bonne appréciation des distances sur l'image qu'il observe et de lui permettre par exemple de piloter de nuit sans erreur de positionnement.

## Revendications

1. Dispositif optique pour système de présentation d'images collimatées à un utilisateur, comportant un imageur (20) et un miroir sphérique (1 ) hors axe, **caractérisé en ce qu'**il comporte des moyens pour corriger la distorsion de l'image présentée à l'utilisateur qui est due au miroir sphérique (1), lesdits moyens comportant un miroir concave tubulaire (21) situé entre l'imageur (20) et le miroir sphérique (1) la surface réfléchissante du miroir tubulaire (21) étant générée par le déplacement d'une première courbe plane en translation parallèle le long d'une seconde courbe également plane.

2. Dispositif selon la revendication 1, **caractérisé en ce que** le miroir sphérique (1) est supporté par une sphère de centre (4), le plan passant par le centre (4) et par le centre de la pupille (11) de l'oeil de l'utilisateur étant le plan de symétrie optique du dispositif et la seconde courbe plane étant dans le plan de symétrie optique du dispositif.

3. Dispositif selon la revendication 2, **caractérisé en ce qu'**il comporte un ou plusieurs groupes optiques de puissance (22) ou de relais (29) placés sur le trajet des rayons entre l'imageur et le miroir sphérique, en amont et/ou en aval du miroir tubulaire, ce ou ces groupes optiques comportant une ou plusieurs lentilles pour former une ouverture très faible, en comparaison à l'ouverture des faisceaux incidents sur le miroir sphérique.

4. Dispositif selon la revendication 3, **caractérisé en ce qu'**au moins une desdites lentilles est convergente.

5. Dispositif selon l'une des revendications 3 et 4, **caractérisé en ce que** le rayon lumineux issu de l'imageur (20) et passant par le centre de la pupille (11) de l'utilisateur est l'axe optique du dispositif, ledit axe optique définissant, lors de sa réflexion sur le miroir tubulaire (21), un premier plan d'incidence dudit axe optique sur le miroir tubulaire, un second plan étant perpendiculaire audit premier plan et passant par la partie (32) de l'axe optique partant du miroir tubulaire (21) en direction du miroir sphérique (1), la première courbe plane étant parallèle audit second plan.

6. Dispositif selon la revendication 5, **caractérisé en ce que** la première courbe plane est un arc de cercle.

7. Dispositif selon l'une des revendications précédentes, **caractérisé en ce que** le miroir sphérique (1) est semi-transparent

8. Dispositif selon l'une des revendications précédentes, **caractérisé en ce que** le système de présentation d'images collimatées est un viseur de casque.

## Claims

1. Optical device for a system presenting collimated images to a user, comprising an imager (20) and an off-axis spherical mirror (1), **characterized in that** it comprises means to correct the distortion of the image presented to the user which is due to the spherical mirror (1), the said means comprising a tubular concave mirror (21) located between the imager (20) and the spherical mirror (1), the reflecting surface of the tubular mirror (21) being generated by the displacement of a first plane curve in parallel translation along a second curve which is also plane.

2. Device according to Claim 1, **characterized in that** the spherical mirror (1) is supported by a sphere with centre (4), the plane passing through the centre (4) and through the centre of the pupil (11) of the user's eye being the plane of optical symmetry of the device and the second plane curve being in the plane of optical symmetry of the device.

3. Device according to Claim 2, **characterized in that** it comprises one or more optical power (22) or relay (29) groups placed on the ray path between the imager and the spherical mirror, upstream and/or downstream from the tubular mirror, this or these optical groups comprising one or more lenses to form a very small aperture in comparison with the aperture of the beams incident on the spherical mirror.

4. Device according to Claim 3, **characterized in that** at least one of the said lenses is convergent.

5. Device according to either of Claims 3 and 4, **characterized in that** the light ray coming from the imager (20) and passing through the centre of the pupil (11) of the user is the optical axis of the device, the said optical axis defining, upon its reflection from the tubular mirror (21), a first plane of incidence of the said optical axis on the tubular mirror, a second plane being perpendicular to the said first plane and passing through the part (32) of the optical axis leaving the tubular mirror (21) in the direction of the spherical mirror (1), the first curve plane being parallel to the said second plane.

6. Device according to Claim 5, **characterized in that** the first plane curve is a circular arc.

7. Device according to one of the preceding claims, **characterized in that** the spherical mirror (1) is semi-transparent.

8. Device according to one of the preceding claims, **characterized in that** the system for presenting collimated images is a helmet sight.

## Patentansprüche

1. Optische Vorrichtung für ein System, das einem Benutzer kollimatierte Bilder darbietet, mit einem Bildgenerator (20) und einem exzentrischen sphärischen Spiegel (1), **dadurch gekennzeichnet, daß** sie Mittel aufweist, um die Verzerrung des dem Benutzer dargebotenen Bilds aufgrund des sphärischen Spiegels (1) zu korrigieren, wobei diese Mittel einen rohrförmigen konkaven Spiegel (21) zwischen dem Bildgenerator (20) und dem sphärischen Spiegel (1) aufweisen und die reflektierende Fläche des rohrförmigen Spiegels (21) durch die Verschiebung einer ebenen Kurve in Translationsrichtung parallel zu einer zweiten, ebenfalls ebenen Kurve erzeugt wird.

2. Vorrichtung nach Anspruch 1, **dadurch gekennzeichnet, daß** der sphärische Spiegel (1) von einer Kugel getragen wird, wobei die durch deren Mittelpunkt (4) und das Zentrum der Pupille (11) des Auges des Benutzers verlaufende Ebene die optische Symmetrie-Ebene der Vorrichtung ist und die zweite ebene Kurve sich in der optischen Symmetrie-Ebene der Vorrichtung befindet.

3. Vorrichtung nach Anspruch 2, **dadurch gekennzeichnet, daß** sie mindestens eine optische Leistungsgruppe (22) oder Relaisgruppe (29) enthält, die sich im Strahlungsverlauf zwischen dem Bildgenerator und dem sphärischen Spiegel vor und/oder hinter dem rohrförmigen Spiegel befindet, wobei diese mindestens eine optische Gruppe eine oder mehrere Linsen enthält, um eine sehr kleine Öffnung im Vergleich zu der Öffnung der auf den sphärischen Spiegel auftreffenden Strahlen zu bilden.

4. Vorrichtung nach Anspruch 3, **dadurch gekennzeichnet, daß** mindestens eine der Linsen eine Sammellinse ist.

5. Vorrichtung nach einem der Ansprüche 3 und 4, **dadurch gekennzeichnet, daß** der vom Bildgenerator (20) kommende Lichtstrahl, der durch das Zentrum der Pupille (11) des Benutzers verläuft, die optische Achse der Vorrichtung ist, die bei ihrer Reflexion am rohrförmigen Spiegel (21) eine erste Einfallsebene für die optische Achse auf dem rohrförmigen Spiegel definiert, während eine zweite Ebene auf der ersten Ebene senkrecht steht und durch den Bereich (32) der optischen Achse verläuft, der vom rohrförmigen Spiegel (21) in Richtung zum sphärischen Spiegel (1) verläuft, und daß die erste ebene Kurve parallel zur zweiten Ebene verläuft.

6. Vorrichtung nach Anspruch 5, **dadurch gekennzeichnet, daß** die erste ebene Kurve ein Kreisbogen ist.

7. Vorrichtung nach einem der vorstehenden Ansprüche, **dadurch gekennzeichnet, daß** der sphärische Spiegel (1) halbdurchlässig ist.

8. Vorrichtung nach einem der vorstehenden Ansprüche, **dadurch gekennzeichnet, daß** das System zur Darbietung von kollimatierten Bildern ein Helmsichtgerät ist.
